# EUROPÄISCHE PATENTANMELDUNG

(11) **EP 1 369 678 A2**
(43) Veröffentlichungstag der Anmeldung: **10.12.2003**
(21) Anmeldenummer: 03011603.2
(22) Anmeldetag: 22.05.2003
(51) Int. Cl.: G01M 1/02

(54) **Vorrichtung zum Auswuchten von Rädern**

(30) Priorität: 28.05.2002 DE 10223859; 08.11.2002 DE 20217413 U
(71) Anmelder: att Automotive Testing Technologies GmbH, 77694 Kehl-Auenheim (DE)
(72) Erfinder: Nussbaum, Steffen, 76530 Baden-Baden (DE)
(74) Vertreter: Brommer, Hans Joachim, Dr.-Ing.

(57) **Zusammenfassung**

Die Erfindung betrifft eine Vorrichtung (1) zum Auswuchten von Rädern, insbesondere Kraftfahrzeugrädern, mit einer in Rotation versetzbaren Welle, auf der das auszuwuchtende Rad (3) montierbar ist, wobei eine Schutzhaube (4) schwenkbar an der Auswuchtvorrichtung angeordnet ist, die in ihrer aktiven Stellung etwa über den halben Umfang des Rades (3) und hierzu radial beabstandet verläuft, wogegen sie in ihrer passiven Stellung den Radumfang weitestgehend freigibt. Wesentlich dabei ist, dass die Schutzhaube (4) aus zumindest zwei Teilstücken (4a,4b) besteht, die in Umfangsrichtung aufeinanderfolgen und schwenkbar über zumindest eine zu der bereits genannten Schwenkachse der Haube parallele Zwischenachse miteinander verbunden sind und dass das am freien Ende der Schutzhaube (4) befindliche Teilstück mit einem Führungselement (7) verbunden ist, das dieses Teilstück beim Verschwenken des anderen, also des an der Auswuchtvorrichtung gelagerten Teilstückes, in die Passivstellung an letzteres heranschwenkt.

## Beschreibung

Die Erfindung betrifft eine Vorrichtung zum Auswuchten von Rädern, insbesondere Kraftfahrzeugrädern, mit einer in Rotation versetzbaren Welle, auf der das auszuwuchtende Rad montierbar ist, wobei eine Schutzhaube schwenkbar an der Auswuchtvorrichtung angeordnet ist, die in ihrer aktiven Stellung etwa über den halben Umfang des Rades und hierzu radial beabstandet verläuft, wogegen sie in ihrer passiven Stellung den Radumfang weitestgehend freigibt.

Derartige Auswuchtvorrichtungen sind in zahlreichen Ausführungsformen bekannt. Meist verläuft die Welle, auf der das auszuwuchtende Rad montiert werden muss, horizontal und die Schutzhaube deckt in ihrer aktiven Stellung etwa die obere Hälfte des Radumfanges ab, damit von dem rotierenden Rad wegfliegende Teilchen nicht das Werkstattpersonal gefährden können. Zugleich dient die Haube als Berührschutz für die Bedienungsperson.

Damit die Montage und Demontage des Rades auf seiner Welle wie auch das Anbringen der Ausgleichsgewichte auf der Felge nicht durch die Schutzhaube behindert wird, kann sie nach oben und hinten um nahezu 180 Grad in eine Passivstellung geschwenkt werden. Das Verschwenken der Schutzhaube ist allerdings wegen ihrer Größe etwas unhandlich und fordert viel Platz.

Es ist deshalb die Aufgabe der vorliegenden Erfindung, die eingangs beschriebene Auswuchtvorrichtung dahingehend zu verbessern, dass das Verschwenken der Schutzhaube erleichtert und der hierfür notwendige Platzbedarf verringert wird. Zugleich soll eine kostengünstige, den rauen Anforderungen im Werkstattbetrieb gewachsene Konstruktion gewährleistet sein.

Diese Aufgabe wird erfindungsgemäß dadurch gelöst, dass die Schutzhaube aus zumindest zwei Teilstücken besteht, die in Umfangsrichtung aufeinanderfolgen und schwenkbar über zumindest eine zu der bereits genannten Schwenkachse der Haube parallele Zwischenachse miteinander verbunden sind und dass das am freien Ende der Schutzhaube befindliche Teilstück mit einem Führungselement verbunden ist, das dieses Teilstück beim Verschwenken des anderen, also des an der Auswuchtvorrichtung gelagerten Teilstückes, in die Passivstellung an letzteres heranschwenkt.

Erfindungsgemäß wird also das am freien Ende der Schutzhaube liegende Teilstück einer Zwangsführung unterworfen, die es an das andere Teilstück mehr oder weniger stark heranklappt, wenn die Schutzhaube in die Passivstellung verschwenkt wird. Durch dieses Zusammenklappen der beiden Teilstücke in der Passivstellung benötigt die Schutzhaube nur noch einen Bruchteil des bisherigen Platzbedarfes. Die Auswuchtvorrichtung kann daher näher an anderen Maschinen oder der Werkstattwand aufgestellt werden. Darüberhinaus ist es nicht mehr notwendig, die Schutzhaube um fast 180 Grad wegzuschwenken, sondern es genügt ein Schwenkwinkel von etwa 70 Grad bis etwa 100 Grad. Dadurch wird die Bedienung der Schutzhaube sehr erleichtert.

Beim Herunterklappen der Schutzhaube in ihre aktive Stellung fügen sich ihre Teilstücke zu einem Ganzen in der üblichen Halbkreisform, wobei ihre Kanten im Übergangsbereich nahezu spaltfrei aneinander liegen oder sich überlappen.

Nachfolgend wird die Erfindung für eine Aufteilung der Haube auf zwei Teilstücke beschrieben. Es liegt selbstverständlich im Rahmen der Erfindung, mit mehr als zwei Teilstücken zu arbeiten, wobei dann gegebenenfalls weitere Führungselemente notwendig werden.

Für die konstruktive Ausbildung des Führungselementes bieten sich dem Fachmann verschiedene Möglichkeiten. In der Praxis hat es sich als zweckmäßig erwiesen, hierfür einen starren Führungsbügel einzusetzen, der schwenkbar mit seinem Teilstück verbunden ist, wobei die Schwenkachse ebenfalls parallel zur Schwenkachse der Haube verläuft.

An seinem anderen Ende ist das Führungselement vorzugsweise an der Auswuchtvorrichtung montiert, inbesondere ebenfalls um eine zur Haubenschwenkachse parallele Achse schwenkbar gelagert.

Bei starrer Ausbildung des Führungseiemenies kann es zusammen mit dem an der Auswuchtvorrichtung gelagerten Hauben-Teilstück näherungsweise eine Parallogrammführung bilden, jedoch derart, dass das am freien Haubenende liegende Teilstück keine Parallelverschiebung durchführt, sondern um etwa 20 Grad bis 40 Grad an das an der Auswuchtvorrichtung gelagerte Teilstück heranklappt, wenn letzteres in die Passivstellung verschwenkt wird. Diese Kinematik lässt sich in einfacher Weise dadurch herbeiführen, dass die Schwenkachsen des Führungsbügels einerseits und die Haubenachse und ihre Zwischenachse andererseits ein Stück aus der Parallelogramm-Anordnung herausversetzt werden. Bei unterhalb des Haubenniveaus verlaufendem Führungsbügel braucht beispielsweise nur der Abstand zwischen den Schwenkachsen des Führungsbügels etwas geringer gewählt zu werden als der Abstand zwischen der Haubenachse und der Zwischenachse, um das gewünschte Zusammenklappen der beiden Hauben-Teilstücke herbeizuführen.

Die genannte Zwischenachse braucht nicht unbedingt am Übergang zwischen den beiden Hauben-Teilstücken zu liegen, sondern kann auch mehr oder weniger in Umfangsrichtung versetzt sein. Besonders günstig ist es, wenn die Zwischenachse an einer Verlängerung des an der Auswuchtvorrichtung gelagerten Teilstückes angeordnet ist und dementsprechend die Zwischenachse bei dem anderen Teilstück fast in dessen mittleren Bereich zu liegen kommt. Dabei sollte sein in Umfangsrichtung ragender Überstand über die Zwischenachse gerade die genannte Verlängerung abdecken, so dass beide Hauben-Teilstücke in der Aktivstellung bündig ineinander übergehen. Es liegt aber selbstverständlich auch im Rahmen der Erfindung, hier mit einer Überlappung der Teilstücke zu arbeiten.

Konstruktiv wird die genannte Verlängerung, an der die Zwischenachse gelagert ist, durch in Umfangsrichtung laufende Stäbe gebildet, die in Profilrillen zumindest eines Teilstückes verlaufen und dadurch nicht auftragen. Hingegen verlaufen der oder die Führungsbügel etwas beabstandet unterhalb des Haubenniveaus, wobei sie auch seitlich neben der Haube angeordnet sein können.

Üblicherweise ist die das Rad tragende Welle der Auswuchtvorrichtung horizontal angeordnet und dies gilt dann auch für die diversen Schwenkachsen der Haube. Die Schwenkbewegung der Teilstücke wird dann vorzugsweise so vorgenommen, dass das an der Auswuchtvorrichtung gelagerte Teilstück in der Passivstellung nahezu vertikal nach oben, das andere Teilstück hingegen nahezu vertikal nach unten ragt. Dabei liegt der Schwerpunkt der Schutzhaube mit ihren Einzelteilen nur etwa 1 Zentimeter bis etwa 20 Zentimeter hinter einer gedachten Vertikalen durch die Haubenschwenkachse. Der obere Totpunkt der Hauben-Öffnungsbewegung braucht also nur geringfügig überschritten zu werden, derart, dass die Haube in ihrer Passivstellung durch ihre Eigengewicht eine stabile Position einnimmt. Diese Position wird wie üblich durch einen Anschlag definiert.

Weitere Merkmale und Vorteile der Erfindung ergeben sich aus der nachfolgenden Beschreibung eines Ausführungsbeispieles und aus der Zeichnung; dabei zeigt
- Fig. 1: eine Seitenansicht der Auswuchtvorrichtung mit beiden Hauben-Stellungen;
- Fig. 2: eine Frontansicht von Fig. 1 mit der Haube in der Aktivstellung;
- Fig. 3: eine Frontansicht von Fig. 1 mit der Haube in der Passivstellung und
- Fig. 4: eine Draufsicht, eine Seitenansicht und einen Schnitt durch ein Hauben-Teilstück.

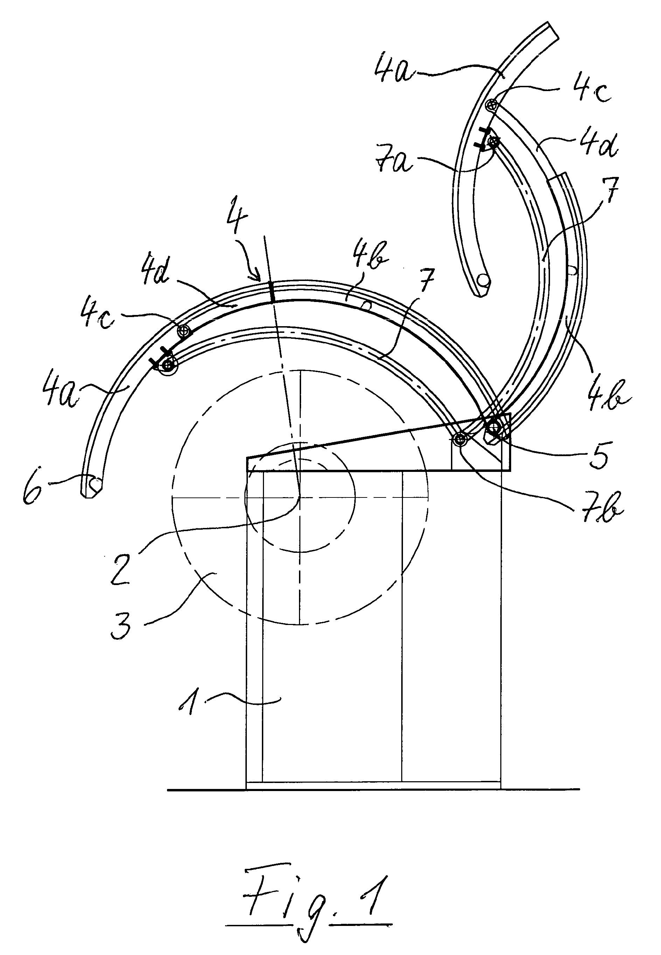

Wie Fig. 1 zeigt, weist die Auswuchtvorrichtung 1 an ihrer einen Seite im oberen Bereich eine horizontal vorstehende, durch das Bezugszeichen 2 angedeutete Welle auf, an der das auszuwuchtende Rad 3 in bekannter Weise montiert wird. Die obere Hälfte des Radumfanges wird aus Sicherheitsgründen von einer etwa halbzylindrischen Schutzhaube 4 abgedeckt. Diese Schutzhaube 4 ist an ihrem hinteren, der Bedienungsperson abgewandten Ende über ein Schwenklager 5 an einer hinteren oberen Ecke der Auswuchtvorrichtung schwenkbar gelagert, so dass sie nach oben und hinten weggeklappt werden kann. Am entgegengesetzten vorderen Ende hat sie einen Griff 6, um sie leichter verschwenken zu können.

Wesentlich ist nun, dass die Schutzhaube 4 aus zwei Teilstücken 4a und 4b besteht. Beide Teilstücke haben annähernd die Form eines Viertelkreises und liegen in der aktiven Stellung der Schutzhaube, wenn also das rotierende Rad 3 abgedeckt werden soll, in Umfangsrichtung hintereinander.

Beide Teilstücke sind schwenkbar über eine Zwischenachse 4c miteinander verbunden, die parallel zur Haubenachse 5 verläuft. Im Ausführungsbeispiel ist die Zwischenachse 4c nicht an der Stossstelle zwischen den beiden Hauben-Teilstücken 4a und 4b angeordnet, sondern an einer Verlängerung 4d des Teilstückes 4b und dementsprechend um ein dieser Verlängerung entsprechendes Stück am Teilstück 4a nach innen versetzt montiert. Man erkennt dies in Fig. 1 deutlich bei der in der in hochgeklappter Stellung, also in der Passivstellung dargestellten Schutzhaube.

Wesentlich ist außerdem, dass das am freien Haubenende befindliche Teilstück 4a beim Verschwenken der Haube einer Zwangsführung unterzogen wird, indem es über einen Führungsbügel 7 ein weiteres Mal schwenkbar mit der Auswuchtvorrichtung 1 verbunden ist. Dieser Führungsbügel 7 ist an beiden Enden 7a und 7b schwenkbar mit dem genannten Teilstück 4a bzw. der Auswuchtvorrichtung verbunden und er verläuft in der Seitenansicht benachbart zu dem anderen Teilstück 4b. Seine wirksame Länge und seine Anlenkpunkte sind auf die wirksame Länge des Teilstückes 4b und dessen Anlenkpunkte so abgestimmt, dass das Teilstück 4a beim Hochschwenken der Haube keine Parallelverschiebung durchführt, sondern zusätzlich noch in eine steilere Position klappt und sich somit im unteren Bereich weiter an das Teilstück 4b annähert.

Es würde jedoch auch im Rahmen der Erfindung liegen, die Zwangsführung für das Teilstück 4a ähnlich einer Parallelogrammführung auszubilden, wenn man nicht so großen Wert auf ein möglichst kompaktes Zusammenfahren beider Teilstücke in der Passivstellung der Haube legt.

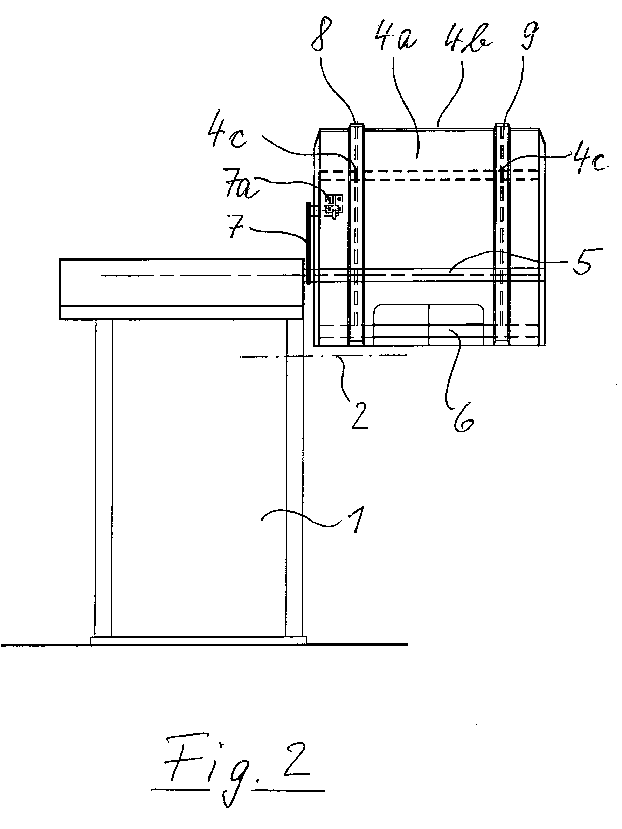

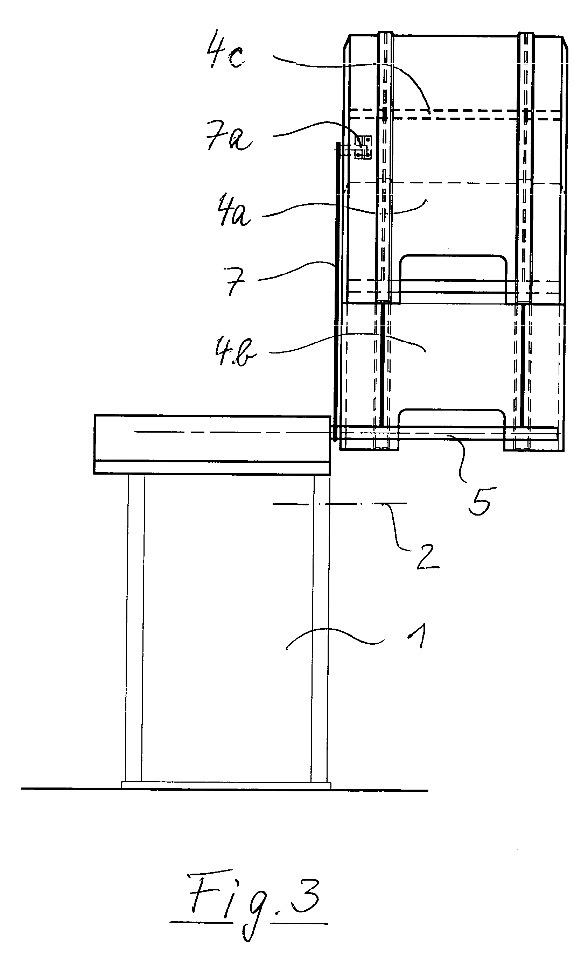

Fig. 2 und 3 zeigen die Haube in der Aktivstellung bzw. in der geöffneten Passivstellung von vorne. Man sieht hier zunächst, dass das von hinten hochkommende Hauben-Teilstück 4b nahe seinem obersten Bereich in das sich nach vorne anscheßende Telistück 4a übergeht. Außerdem erkennt man, dass nach vorne anschlIeßende Teilstück 4a übergeht. Außerdem erkennt man, dass beide Teilstück Profilrillen 8 und 9 aufweisen, die in Umfangsrichtung verlaufen und die nicht nur zur Aussteifung der Haube dienen, sondern zugleich auch zur Aufnahme der Verlängerung 4b, die durch zwei entsprechende Stäbe gebildet ist, die an ihren Enden jeweils die Zwischenachse 4c tragen, an der das vordere Teilstück 4a geiagert ist.

Außerdem erkennt man, dass im Zwischenraum zwischen Haube und Auswuchtvorrichtung der Führungsbügel 7 angeordnet ist, der die gewünschte Schwenkführung des Teilstückes 4a verursacht. Selbtsverständlich könnte dieser Führungsbügel auch innerhalb der Haube verlaufen.

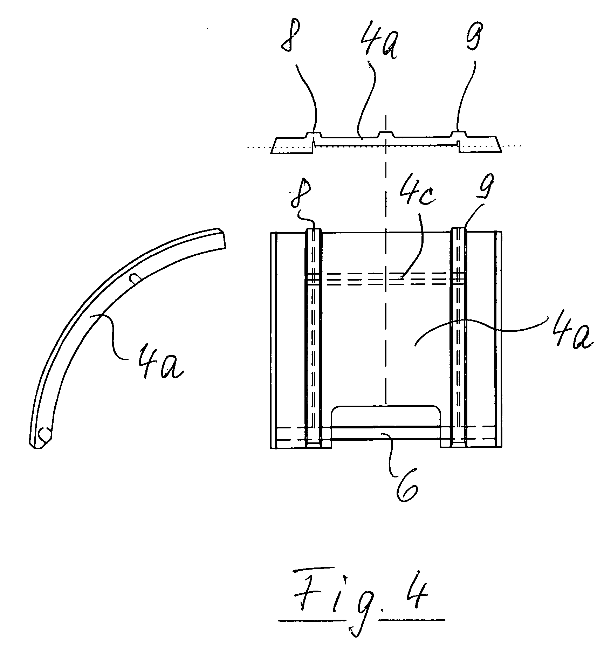

Fig. 4 schließlich zeigt Form und Profilierung des Hauben-Teilstückes 4a in verschiedenen Ansichten. Die nahezu gleiche Form hat auch das Hauben-Teilstück 4b, nur dass hier anstelle des Griffes 6 die Haubenachse 5 für die Lagerung an der Auswuchtvorrichtung angebracht ist.

Wie vor allem Fig. 1 zeigt, zeichnet sich die erfindungsgemäße Haubenkonstruktion in der hochgeklappten Passivstellung durch äußerst geringen Platzbedarf, vor allem nach hinten aus. Auch Verkürzen sich die Stellwege erheblich, so dass die Bedienung erleichtert wird.

## Patentansprüche

1. Vorrichtung zum Auswuchten von Rädern (3), insbesondere Kraftfahrzeugrädern mit einer in Rotation versetzbaren Welle (2) auf der das auszuwuchtende Rad (3) montierbar ist, wobei eine Schutzhaube (4) um eine zu der genannten Welle parallele Schwenkachse (5) schwenkbar an der Auswuchtvorrichtung (1) angeordnet ist und in ihrer aktiven Stellung etwa über den halben Umfang des Rades (3) und hierzu radial beabstandet verläuft, wogegen sie in ihrer passiven Stellung den Radumfang weitestgehend freigibt,
**dadurch gekennzeichnet,**
**dass** die Schutzhaube aus zumindest zwei Teilstücken (4a, 4b) besteht, die in Umfangsrichtung aufeinanderfolgen und schwenkbar über zumindest eine zu der genannten Schwenkachse (5) parallele Zwischenachse (4c) miteinander verbunden sind und dass das am freien Ende der Schutzhaube befindliche Teilstück (4a) mit zumindest einem Führungselement (7) verbunden ist, das dieses Teilstück (4a) beim Verschwenken der Haube in die Passivstellung an das andere Teilstück (4b) heranschwenkt.

2. Vorrichtung nach Anspruch 1,
**dadurch gekennzeichnet,**
**dass** das Führungselement (7) als starrer Führungsbügel ausgebildet ist, der schwenkbar sowohl an seinem Teilstück (4a) als auch an der Auswuchtvorrichtung (1) um zur Schwenkachse (5) parallele Achsen gelagert ist.

3. Vorrichtung nach Anspruch 2,
**dadurch gekennzeichnet,**
**dass** der Führungsbügel (7) zusammen mit dem an der Umwuchtvorrichtung gelagerten Hauben-Teilstück (4b) näherungsweise eine Parallelogramm-Führung bildet.

4. Vorrichtung nach Anspruch 2,
**dadurch gekennzeichnet,**
**dass** der Führungsbügel (7) relativ zu dem Hauben-Teilstück (4b) so bemessen und positioniert ist, dass beim Verschwenken der Haube in die Passivstellung das am freien Haubenende befindliche Teilstück (4a) in Richtung auf das andere Teilstück (4b) einklappt.

5. Vorrichtung nach Anspruch 2, **dadurch gekennzeichnet, dass** der Führungsbügel (7) in der Seitenansicht unterhalb der Haube verläuft.

6. Vorrichtung nach Anspruch 1,
**dadurch gekennzeichnet,**
**dass** das an der Auswuchtvorrichtung gelagerte Hauben-Teilstück (4b) eine Verlängerung (4d) aufweist und dass an dieser Verlängerung die Zwischenachse (4c) angeordnet ist.

7. Vorrichtung nach Anspruch 6,
**dadurch gekennzeichnet,**
**dass** bei dem anderen Hauben-Teilstück (4a) die Zwischenachse (7a) entsprechend der Länge der Verlängerung (4d) nach innen versetzt ist.

8. Vorrichtung nach Anspruch 6, **dadurch gekennzeichnet, dass** die Verlängerung (4d) durch in Umfangsrichtung laufende Stäbe gebildet ist.

9. Vorrichtung nach Anspruch 6,
**dadurch gekennzeichnet,**
**dass** die Verlängerung (4d) in Profilrillen zumindest eines Teilstückes verläuft.

10. Vorrichtung nach Anspruch 1,
**dadurch gekennzeichnet,**
**dass** bei horizontal verlaufender Schwenkachse (5) das an der Auswuchtvorrichtung gelagerte Teilstück (4b) in der Passivstellung nahezu vertikal nach oben, das andere Teilstück (4a) nahezu nach unten ragt.

11. Vorrichtung nach Anspruch 10,
**dadurch gekennzeichnet,**
**dass** der Schwerpunkt der Schutzhaube (4a, 4b) mit ihrem Führungsbügel (7) in der Passivstellung nur etwa 1 Zentimeter bis etwa 20 Zentimeter hinter einer gedachten Vertikalen durch die Haubenschwenkachse (5) liegt.

12. Schutzhaube (4a, 4b) für eine Vorrichtung gemäß einem der Ansprüche 1 bis 11.
